Europäisches Patentamt

**European Patent Office**

**Office européen des brevets**

(19)

(11) Publication number : **0 464 822 B1**

## (12) EUROPEAN PATENT SPECIFICATION

(45) Date of publication of patent specification :
**15.06.94 Bulletin 94/24**

(51) Int. Cl.⁵ : **G01L 3/24, G01M 15/00**

(21) Application number : **91111134.2**

(22) Date of filing : **04.07.91**

(54) **A method and apparatus for measuring physical quantities, in particular power, in turbocompressor forced induction internal-combustion engines.**

(30) Priority : **05.07.90 IT 6749890**

(43) Date of publication of application :
**08.01.92 Bulletin 92/02**

(45) Publication of the grant of the patent :
**15.06.94 Bulletin 94/24**

(84) Designated Contracting States :
**DE ES FR GB IT NL SE**

(56) References cited :
**GB-A- 2 052 070**
**US-A- 4 100 793**
**US-A- 4 356 725**
**US-A- 4 501 138**

(73) Proprietor : **IVECO FIAT S.p.A.**
**Via Puglia 35**
**I-10156 Torino (IT)**

(72) Inventor : **Cuniberti, Francesco**
**Via Breglio, 127**
**I-10100 Torino (IT)**
Inventor : **Mazaud, Jean François**
**Tanneggstrasse 5**
**CH-9320 Arbon (CH)**
Inventor : **Operti, Claudio**
**Strada della Verna, 40**
**I-10100 Torino (IT)**

(74) Representative : **Jorio, Paolo et al**
**Studio Torta,**
**Via Viotti, 9**
**I-10121 Torino (IT)**

EP 0 464 822 B1

## Description

The present invention relates a method and apparatus for measuring physical quantities, in particular power, in forced induction internal-combustion engines.

It is known that the power delivered by an internal-combustion engine, as well as other quantities relating to the operation of the engine, can be measured by determining the angular acceleration of the engine, subjected to rapid acceleration, and by calculating the corresponding instantaneous torque C. In fact, when the drive shaft is in a condition in which it is substantially free of braking torques applied externally to the shaft itself, the angular acceleration is linked to the instantaneous torque by the following equation relating to dynamic balance:

$$\dot{W} = K C$$

in which K is a constant depending, inter alia, on the inertia of the engine and can be obtained in known manner.

This type of determination, which is particularly advantageous insofar as it can be applied to engines installed in motor vehicles, has given optimum results in the case of normally aspirated engines; however, it does not provide valid results in the case of internal-combustion engines of the turbocharged type. In fact, in this second case, the system exhibits an inherent time delay caused either owing to the fact the acceleration is "sensed" by the turbocharging system only at the end of combustion, when the exhaust gases produced by the combustion itself actuate the turbine and the latter can thus impart the motion to the turbocompressor, or because of the inertia of the turbocompressor itself. Consequently, the contribution to the power delivered by the engine is divided into two portions which are temporally out of phase: the first portion depends substantially on the manner (rapid) in which the accelerator is operated by the driver, whereas the second portion, following the first portion, depends on the additional contribution provided by the turbocompressor.

Therefore, any measurement of angular acceleration carried out under these conditions cannot provide pertinent data because the contribution from the turbocompressor is delayed with respect to the optimum measurement time.

It is the aim of the present invention to provide a method and apparatus for measuring physical quantities, in particular power, in forced induction internal-combustion engines so as to obtain valid results even for this type of engine, with a solution which is simple both in design and in operation.

According to the present invention there is devised a method of measuring physical quantities, in particular power, in an internal-combustion engine comprising an output shaft and turbocharged by means of a turbocompressor, said method comprising the stages of effecting a rapid acceleration of the engine substantially in the absence of external braking torques and measuring the corresponding instantaneous acceleration of the output shaft, characterised in that it comprises a stage in which the turbocompressor is brought to a predetermined normal running speed before said stage in which rapid acceleration of the engine is induced.

The invention also relates to an apparatus for measuring physical quantities, in particular power, in a forced induction internal-combustion engine comprising an output shaft, a turbocompressor and an air intake duct, said apparatus comprising a sensor for measuring the speed and angular acceleration of said output shaft, and calculating means which are adapted to calculate said physical quantities and which are connected to said sensor, characterised by said apparatus comprising means being able to bring said turbocompressor to a predetermined speed of rotation, said means being able to be connected selectively to said turbocompressor.

In practice, according to the invention the engine turbocompressor is brought to a predetermined rated speed of rotation before carrying out the rapid acceleration and before determining the corresponding instantaneous speed and angular acceleration values of the engine output shaft, so that, at the instant of the rapid acceleration, the turbocompressor is in the normal running condition and the determination of the speed and angular acceleration of the output shaft of the engine provides pertinent values which can be used to calculate the torque and power delivered by the engine itself.

With a view to a better understanding of the present invention, a preferred form of embodiment will be described below non-restrictively by way of example, with reference to the accompanying drawings, wherein:

Fig. 1 illustrates a simplified block diagram of the apparatus according to the invention;

Fig. 2 illustrates a flow diagram of the principal stages of the method according to the invention, and

Fig. 3 represents by way of example the speed curves of three different engines during acceleration for measuring engine power.

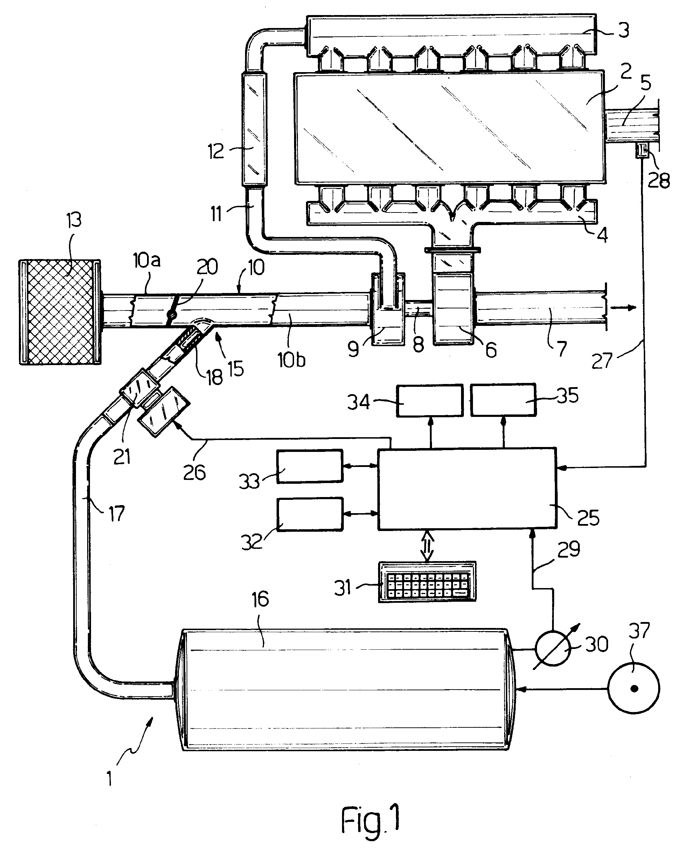

In Fig. 1 the reference numeral 1 denotes the apparatus for measuring output speed and for calculating characteristic operating quantities, for example the power delivered, of a turbocharged internal-combustion engine. The apparatus 1 is generally used in the workshop but in certain cases (for example for measuring the power delivered by the engines of locomotives or boats) it may also be installed on board.

As shown in Fig. 1 and in a known manner, the engine 2 is connected to an induction manifold 3 and to an exhaust manifold 4, and it is provided with an output shaft 5 which, in turn, is connected to transmission members (not shown) of a motor vehicle.

The engine exhaust manifold 4 is connected to a turbine 6 in such a way that the latter is actuated by the combustion gases which are subsequently discharged through an exhaust pipe 7. The output shaft 8 of the turbine 6 is connected to a compressor 9 which, therefore, receives the motion from the turbine 6 itself, so as to bring the combustion air supplied by an intake duct 10 to the required pressure. The outlet from the compressor 9 is connected to an air inlet duct 11, via an intercooler 12, and terminates in alignment with the induction manifold 3.

In per se known manner, the combustion air is aspirated from the atmosphere into the intake duct 10 through an air filter 13.

As shown in Fig. 1, the intake duct 10 is provided with a branch 15 through which pressurised air, coming from a reservoir 16, can be selectively fed to the intake duct 10 itself by a pressurised air duct 17 connected to the branch 15 via a nozzle 18. In practice, the intake duct 10 defines a first portion 10a extending between the air filter 13 and the branch 15, namely disposed upstream of the branch 15 itself in the direction of air flow, and a second portion 10b extending between the branch 15 and the compressor 9, namely disposed downstream of the branch 15.

In the first portion 10a of the intake duct 10 there is provided a non-return butterfly valve 20 which is pivotally mounted in an eccentric position on the duct 10 so as to shut off automatically the flow of air within the portion 10a during the supply of pressurised air from the reservoir 16. Analogously, a solenoid valve 21 for shutting off the pressurised air supplied from the reservoir 16 is provided in the pressurised air duct 17, upstream of the branch 15.

The apparatus in Fig. 1 also comprises a central control unit 25 for controlling the stages for initiating a normal running condition of the turbocompressor 9, for determining quantities relating to the output shaft 5 of the engine (position, speed and angular acceleration) and for calculating the power delivered by the engine and other characteristic operating quantities.

For this purpose, the central unit 25 is connected via a line 26 to the solenoid valve 21 and, via a line 27, to a tachometric sensor 28 mounted on the output shaft 5 of the engine (therefore, comprising any known device suitable for this purpose, for example a phonic wheel or a tachometric dynamo) and, via a line 29, to a pressure gauge 30 for measuring the pressure prevailing inside the reservoir 16.

Moreover, the central unit 25 is connected to a keyboard 31 for the input of data by an operator, to a first memory 32 storing predetermined data (for example the required pressure in the reservoir 16 and the minimum and maximum thresholds of the angular acceleration of the output shaft 5, as will be explained in more detail below) depending on the type of engine, to a second memory 33 storing the results, to a display unit 34 for displaying data, and to an acceleration consent device 35, for example an optical element, for indicating to the operator that the normal running condition has been attained by the compressor 9 and for requesting rapid acceleration to be carried out manually. Alternatively, the device 35 may be omitted and the acceleration request can be indicated by the display unit 34 in the form of a suitable message, or else, if the motor vehicle is already so equipped, the device 35 can be connected to the components of the motor vehicle designed to carry out the automatic control of acceleration so as to control acceleration directly, without requesting manual intervention.

The apparatus in Fig. 1 is optionally provided with a compressor 37 for supplying air to the reservoir 16 at the required pressure.

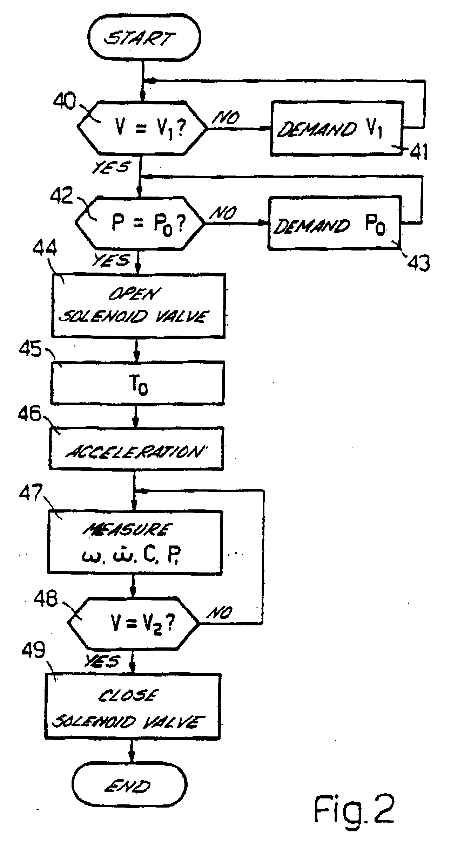

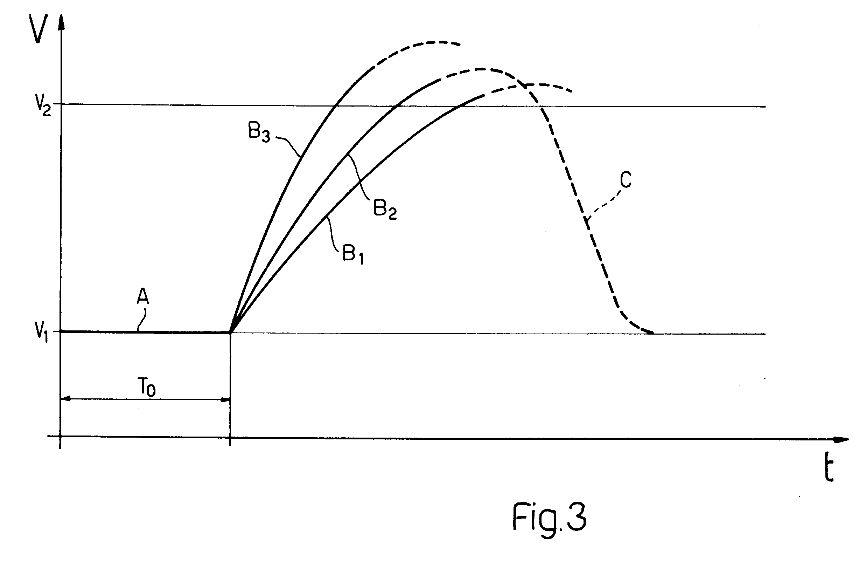

Referring now to Figs. 2 & 3 there will be described in the following the mode of operation for determining the angular acceleration of the output shaft 5 of the engine 2, subjected to control and measurement of the power delivered thereby, as well as optionally other quantities relating to the engine itself, carried out by the apparatus in Fig. 1.

At the start of the operation, after the operator has connected the duct 17 for pressurised air coming from the reservoir 16 to the intake duct 10 in alignment with the branch 15, and has attached the tachometric device 28 to the output shaft 5 of the engine 2 and, optionally, has connected the device 35, operating as an accelerator control, to the respective components of the motor vehicle, as well as having entered via the keyboard 31 the type of engine being tested, so that the central unit 25 can recall from the memory the recorded values relating to the engine being tested, the central unit 25 verifies whether the speed of the output shaft 5 is equal to a minimum predetermined threshold value $V_1$ (block 40). If this is not so, the central unit 25 indicates this situation by way of the display unit 34 and requests that the engine be brought into this condition (block 41) and returns to control the speed. If, however, the engine is already operating at the requested speed $V_1$ (or after it has been brought to this speed) the central unit 25 verifies whether the pressure inside the reservoir 16 is equal to a predetermined value $P_O$ (block 42).

In the result is negative, the central unit 25 indicates this condition by way of the display unit 34 and requests adjustment of the pressure (block 43). When the required pressure is reached, the central unit 25 controls the opening of the solenoid valve 21 by sending a suitable command along the line 26 (block 44) and waits for a predetermined time $T_O$ (block 45), during which the compressed air, which flows through the compressor 9, brings it to the required normal running speed (corresponding to the straight section A of the curves shown in Fig. 3 and corresponding to the speed of rotation of the output shaft 5 of the engine 4 [sic]). During this stage, because of the pressure difference acting on the non-return valve 20, said valve closes the portion 10a of the duct 10, thereby preventing the pressurised air supplied by the reservoir 16 from escaping through the filter 13.

When the time $T_O$ has elapsed, the central unit 25 permits acceleration by displaying a message (or by causing an optical element to be illuminated) so as to advise the operator to actuate the accelerator pedal or, where provided, by sending a corresponding command to the means provided to control acceleration (block 46). During this stage, the operating energy of the compressor 9 is supplied by the turbine 6 and the flow rate of air aspirated exceeds that delivered by the nozzle 18, whereby the non-return valve 20 opens and the air is aspirated through the filter 13.

During the rapid acceleration stage the determination of the angular velocity is carried out, as is the calculation of the angular acceleration, of the torque and of the power delivered by the engine 2, by interrogating the tachometric device 28 and effecting the necessary calculations (in per se known manner, block 47). Therefore, the central unit 25 verifies whether the engine has reached a predetermined maximum speed threshold ($V_2$, block 48) and, if the result is negative, it repeats the determination of the speed and the calculation of the data provided. Therefore, by repeating these operations until the maximum speed threshold $V_2$ is attained, it is possible to record the behaviour of the quantities monitored with time, said behaviour varying in accordance with the characteristics of the engine being tested, as illustrated by way of example in Fig. 3, with respect to engine speed, by the curve portions $B_1$, $B_2$ and $B_3$ which relate to three different engines.

When the maximum speed threshold has been reached (YES output of block 48), the central unit 25 controls the closing of the solenoid valve 21 (block 49) so that at the end of acceleration the engine speed is reduced (dashed portion following the curve $B_2$ in Fig. 3).

The procedure described above can be repeated a number of times, for example eight times, for statistical purposes.

Therefore, the method and apparatus described enable characteristic quantities of the engine to be measured under normal running conditions of the compressor, so that these physical quantities provide results which do in fact correspond to the characteristics of the engine tested.

The method and apparatus described are simple and require the operator to carry out only a small number of operations to connect the apparatus to the engine and to actuate the accelerator, as required by the central unit 25.

Finally, it is evident that the method and apparatus described and illustrated here could undergo various modifications, without departing from the scope of the present invention.

In particular, it is emphasized that the central unit 25 could comprise an autonomous central microprocessor unit which has been suitably programmed to control the measurement stages, or else it could form part of a more complicated system, where available, provided to carry out additional controls.

Moreover, the tachometric sensor 28 may comprise any device able to provide data in respect of angular position and/or speed and, optionally, acceleration of the output shaft 5 so as to enable the calculation of the torque delivered and other operating quantities of the engine, it being possible for said device to be attached to the output shaft 5 itself or to be suitably applied to said shaft 5 so as to carry out measurement.

**Claims**

1.  A method of measuring physical quantities, in particular power, in an internal-combustion engine (2) comprising an output shaft (5) and undergoing forced induction by a turbocompressor (9), said method comprising the stages of effecting a rapid acceleration of the engine (2) substantially in the absence of external braking torques and measuring the corresponding instantaneous acceleration of the output shaft (5), characterised in that it comprises a stage in which the turbocompressor (9) is brought to a predetermined normal running speed before said stage in which rapid acceleration of the engine (2) induced.

2.  A method according to Claim 1, characterised in that said stage in which the turbocompressor (9) is brought to a predetermined normal running speed comprises a stage in which air at a predetermined high pressure is fed to the turbocompressor.

3.  A method according to Claim 2, characterised by comprising the stage of waiting a predetermined time ($T_O$) after feeding air at a high pressure and before said stage of effecting a rapid acceleration of the engine (2).

4.  A method according to Claim 2 or 3, characterised by comprising the stages of verifying that the speed of rotation of the engine (2) is equal to a minimum predetermined threshold value ($V_1$), verifying that the pressure of the air to be fed to the turbocompressor (9) is equal to a predetermined value $P_O$, bringing the turbocompressor to the predetermined normal running speed, effecting rapid acceleration, determining the physical quantities of the engine (2) until the engine reaches a predetermined upper threshold value ($V_2$), and interrupting the supply of pressurised air.

5. A method according to any one of Claims 1 to 4, characterised in that said stages of bringing the turbocompressor (9) to a predetermined normal running speed, effecting rapid acceleration of the engine substantially in the absence of extraneous braking torques and measuring the corresponding instantaneous acceleration of the output shaft (5) are repeated a number of times in sequence.

6. An apparatus for measuring physical quantities, in particular power, in a forced induction internal combustion engine comprising an output shaft, a turbocompressor and an air intake duct, said apparatus comprising a sensor (28) for measuring the speed and angular acceleration of said output shaft, and calculating means (25) which are adapted to calculate said physical quantities and which are connected to said sensor (28), characterised by comprising means (16-18) adapted to bring said turbocompressor to a predetermined speed of rotation, said means (16-18) being able to be connected selectively to said turbocompressor.

7. An apparatus according to Claim 6, characterised in that said means adapted to bring the turbocompressor (9) to a predetermined speed of rotation comprises a pressurised air supply (16) which can be selectively (21) connected to said intake duct (10).

8. An apparatus according to Claim 7, characterised in that said intake duct (10) has a branch (15) connecting said turbocompressor (9) to an air filter (13) and to said pressurised air supply (16).

9. An apparatus according to Claim 8, characterised in that said intake duct (10) has a portion (10a) which extends between said air filter (13) and said branch (15) and which is provided with a non-return valve (20), and in that said branch (15) is connected to said pressurised air supply (16) via a pressurised air duct (17) provided with its own controlled valve (21).

10. An apparatus according to Claim 9, characterised in that said controlled valve is a solenoid valve (21).

11. An apparatus according to Claim 9, characterised by comprising a central control unit (25) connected to said sensor (28), to said pressurised air supply (16) and to said controlled valve (21), and including said calculating means (47), said central unit (25) being adapted to control the opening of said controlled valve (21) and to permit the acceleration of said engine (2) when said predetermined speed of rotation is attained by said turbocompressor (9).

12. An apparatus according to Claim 10, characterised in that said central unit (25) comprises means (4) adapted to verify that the speed (V) of said engine (2), determined by means of said sensor (28), is equal to a first predetermined threshold value ($V_1$), means (42) adapted to verify that the pressure provided by said compressed air supply (16) is equal to a predetermined pressure value ($P_O$), means (44) adapted to control the opening of said controlled valve (21), delay means (45), means (46) adapted to permit the acceleration, means (48) adapted to control the speed (V) of said engine (2) and to enable said calculating means (47) as along as said speed is below a second predetermined threshold value ($V_2$), and means (49) adapted to control the closing of said controlled valve (21).

13. An apparatus according to Claim 12, characterised in that it comprises memory means (32, 33), means (31) for the input of data by an operator, display means (34) and means (30) for determining the pressure generated by said pressurised air supply (16), all of said means being connected to said central control unit (25).

## Patentansprüche

1. Verfahren zum Messen physikalischer Mengen, insbesondere Leistung, in einer Brennkraftmaschine (2) mit einer Ausgangswelle (5), mit Zwangsladung durch einen Turbokompressor (9), welches Verfahren eine rasche Beschleunigung der Maschine (2) im wesentlichen in Abwesenheit von äußeren Bremsmomenten und die Messung der entsprechenden augenblicklichen Beschleunigung der Ausgangswelle (5) umfaßt, dadurch **gekennzeichnet,** daß es einen Schritt umfaßt, bei dem der Turbokompressor (9) auf eine vorgegebene normale Drehzahl gebracht wird, bevor der Schritt der raschen Beschleunigung der Maschine (2) eingeleitet wird.

2. Verfahren nach Anspruch 1, dadurch **gekennzeichnet,** daß der Schritt, bei dem der Turbokompressor (9) auf eine vorgegebene normale Drehzahl gebracht wird, einen Schritt umfaßt, bei dem Luft mit vorgegebenem hohen Druck dem Turbokompressor zugeführt wird.

3. Verfahren nach Anspruch 2, **gekennzeichnet** durch den Schritt, eine vorgegebene Zeit ($T_0$) nach dem Zuführen von Luft mit hohem Druck und vor dem Schritt der raschen Beschleunigung der Maschine (2) abzuwarten.

4. Verfahren nach Anspruch 2 oder 3, **gekennzeichnet** durch die Schritte der Sicherstellung, daß die Drehzahl der Maschine (2) gleich einem vorgegebenen Mindestschwellenwert ($V_1$) ist, daß der Druck der Luft, die dem Turbokompressor (9) zugeführt wird, gleich einem vorgegebenen Wert ($P_0$) ist, des anschließendes Bringens des Turbokompressors auf die vorgegebene normale Drehzahl, der Bewirkung einer raschen Beschleunigung, der Bestimmung der physikalischen Quantitäten der Maschine (2) bis zum Erreichen eines vorgegebenen oberen Schwellenwerts ($V_2$) der Maschine und des Unterbrechens der Zufuhr der unter Druck stehenden Luft.

5. Verfahren nach einem der Ansprüche 1 bis 4, dadurch **gekennzeichnet,** daß die Schritte des Bringens des Turbokompressors (9) auf eine vorgegebene Drehzahl, des Bewirkens einer raschen Beschleunigung der Maschine im wesentlichen in Abhängigkeit von äußeren Bremsmomenten und des Messens der augenblicklichen Beschleunigung der Ausgangswelle (5) mehrfach in Reihe wiederholt werden.

6. Vorrichtung zur Messung physikalischer Mengen, insbesondere Leistung, in einer aufgeladenen Brennkraftmaschine mit einer Ausgangswelle, einem Turbokompressor und einer Lufteinlaßleitung, welche Vorrichtung einen Sensor (28) zum Messen der Drehzahl und der Winkelbeschleunigung der Ausgangswelle und eine Rechnereinrichtung (25) umfaßt, die vorgesehen ist zur Berechnung der physikalischen Mengen und die mit dem Sensor (28) verbunden ist, **gekennzeichnet** durch eine Einrichtung (16-18), die dazu vorgesehen ist, den Turbokompressor auf eine vorgegebene Drehzahl zu bringen, welche Einrichtung (16-18) selektiv mit dem Turbokompressor verbunden werden kann.

7. Vorrichtung nach Anspruch 6, dadurch **gekennzeichnet**, daß die Einrichtung, die geeignet ist, den Turbokompressor (9) auf eine vorgegebene Drehzahl zu bringen, eine Druckluftzufuhreinrichtung (16) umfaßt, die selektiv (21) mit der Einlaßleitung (10) verbunden werden kann.

8. Vorrichtung nach Anspruch 7, dadurch **gekennzeichnet,** daß die Einlaßleitung (10) eine Zweigleitung (15) aufweist, die den Turbokompressor (9) mit einem Luftfilter (13) und der Druckluftzufuhreinrichtung (16) verbindet.

9. Vorrichtung nach Anspruch 8, dadurch **gekennzeichnet,** daß die Einlaßleitung (10) einen Abschnitt (10a) aufweist, der sich zwischen dem Luftfilter (13) und der Zweigleitung (19) erstreckt und der mit einem Einwegventil (20) versehen ist, und daß die Zweigleitung (15) mit der Druckluftzufuhreinrichtung (16) über eine Druckluftleitung (17) verbunden ist, die mit einem eigenen gesteuerten Ventil (21) versehen ist.

10. Vorrichtung nach Anspruch 9, dadurch **gekennzeichnet,** daß das gesteuerte Ventil ein Magnetventil (21) ist.

11. Vorrichtung nach Anspruch 9, **gekennzeichnet** durch eine zentrale Steuereinheit (25), die mit dem Sensor (28), der Druckluftzufuhreinrichtung (16) und dem gesteuerten Ventil (21) verbunden ist und die Rechnereinrichtung (47) umfaßt, welche zentrale Einheit (25) vorgesehen ist zur Steuerung der Öffnung des gesteuerten Ventils (21) und zur Ermöglichung der Beschleunigung der Maschine (2), wenn die vorgegebene Drehzahl durch den Turbokompressor (9) erreicht ist.

12. Vorrichtung nach Anspruch 10, dadurch **gekennzeichnet,** daß die zentrale Einheit (25) eine Einrichtung (4), die vorgesehen ist zur Sicherstellung, daß die Drehzahl (V) der Maschine (2), die durch den Sensor (28) bestimmt wird, gleich einem ersten vorgegebenen Schwellenwert ($V_1$) ist, eine Einrichtung (42), die sicherstellt, daß der Druck der Druckluftzufuhreinrichtung (16) gleich einem vorgegebenen Druckwert ($P_0$) ist, eine Einrichtung zur Steuerung der Öffnung des gesteuerten Ventils (21), eine Verzögerungseinrichtung, eine Einrichtung (46) zur Ermöglichung der Beschleunigung, eine Einrichtung (48) zur Steuerung der Drehzahl (V) der Maschine (2). die die Rechnereinrichtung (47) freigibt, solange die Drehzahl unter dem vorgegebenen zweiten Schwellenwert ($V_2$) liegt, und eine Einrichtung (49) zur Steuerung des Schließens des gesteuerten Ventils (21) umfaßt.

13. Vorrichtung nach Anspruch 12, dadurch **gekennzeichnet,** daß sie eine Speichereinrichtung (32,33), eine Einrichtung (31) für die Eingabe von Daten durch einen Bedienungsmann, eine Anzeigeeinrichtung (34) und eine Einrichtung (30) zur Bestimmung des durch die Druckluftzufuhreinrichtung (16) erzeugten Druckes umfaßt, und daß alle diese Einrichtungen mit der zentralen Steuereinheit (25) verbunden sind.

## Revendications

1. Procédé de mesure de grandeurs physiques, en particulier une puissance, dans un moteur à combustion interne (2) comprenant un arbre de sortie (5) et soumis à une alimentation forcée par un turbocompresseur (9), ledit procédé comprenant les étapes consistant à produire une accélération rapide du moteur (2) sensiblement en l'absence de couples extérieurs de freinage et à mesurer l'accélération instantanée correspondante de l'arbre de sortie (5), caractérisé en ce qu'il comprend une étape, lors de laquelle on amène le turbocompresseur (9) à une vitesse de fonctionnement normale prédéterminée avant ladite étape lors de laquelle une accélération rapide du moteur (2) est produite.

2. Procédé selon la revendication 1, caractérisé en ce que ladite étape lors de laquelle le turbocompresseur (9) est amené à une vitesse de fonctionnement normale prédéterminée, comprend une étape lors de laquelle de l'air à une haute pression prédéterminée est envoyé au turbocompresseur.

3. Procédé selon la revendication 2, caractérisé en ce qu'il comprend l'étape consistant à attendre un intervalle de temps prédéterminé ($T_o$) après l'envoi d'air à haute pression et avant ladite étape d'accélération rapide du moteur (2).

4. Procédé selon la revendication 2 ou 3, caractérisé en ce qu'il comprend les étapes consistant à vérifier que la vitesse de rotation du moteur (2) est égale à une valeur de seuil minimale prédéterminée ($V_1$), à vérifier que la pression de l'air devant être envoyé au turbocompresseur (9) est égale à une valeur prédéterminée $P_o$, à amener le turbocompresseur à une vitesse de fonctionnement normale prédéterminée, à produire une accélération rapide, à déterminer les grandeurs physiques du moteur (2) jusqu'à ce que le moteur atteigne une valeur de seuil supérieure prédéterminée ($V_2$), et à interrompre l'envoi d'air comprimé.

5. Procédé selon l'une quelconque des revendications 1 à 4, caractérisé en ce que lesdites étapes consistant à amener le turbocompresseur (9) à une vitesse de fonctionnement normale prédéterminée, à commander une accélération rapide du moteur sensiblement en l'absence de couples extérieurs de freinage et à mesurer l'accélération instantanée correspondante de l'arbre de sortie (5) sont répétées successivement un certain nombre de fois.

6. Dispositif pour mesurer des grandeurs physiques, en particulier une puissance, dans un moteur à combustion interne à alimentation forcée comprenant un arbre de sortie, un turbocompresseur et un conduit d'admission d'air, ledit dispositif comprenant un capteur (28) servant à mesurer la vitesse et l'accélération angulaire dudit arbre de sortie, et des moyens de calcul (25), qui sont adaptés pour calculer lesdites grandeurs physiques et qui sont raccordés audit capteur (28), caractérisé en ce qu'il comprend des moyens (16 à 18) aptes à amener ledit turbocompresseur à une vitesse de rotation prédéterminée, lesdits moyens (16 à 18) pouvant être raccordés de façon sélective audit turbocompresseur.

7. Dispositif selon la revendication 6, caractérisé en ce que lesdits moyens aptes à amener le turbocompresseur (9) à une vitesse prédéterminée de rotation comprennent une source d'air comprimé (16), qui peut être raccordée de façon sélective (21) audit conduit d'admission (10).

8. Dispositif selon la revendication 7, caractérisé en ce que ledit conduit d'admission (10) possède une dérivation (15) raccordant ledit turbocompresseur (9) à un filtre à air (13) et à ladite source d'air comprimé (16).

9. Dispositif selon la revendication 8, caractérisé en ce que ledit conduit d'admission (10) possède une partie (10a) qui s'étend entre ledit filtre à air (13) et ladite dérivation (15) et qui comporte une valve antiretour (20), et dans lequel ladite dérivation (15) est raccordée à ladite source d'air comprimé (16) par l'intermédiaire d'un conduit à air comprimé (17) comportant sa propre valve commandée (21).

10. Dispositif selon la revendication 9, caractérisé en ce que ladite valve commandée est une valve électromagnétique (21).

11. Dispositif selon la revendication 9, caractérisé par une unité de commande centrale (25) raccordée audit capteur (28), à ladite source d'air comprimé (16) et à ladite valve commandée (21), et comprenant lesdits moyens de calcul (47), ladite unité centrale (25) étant adaptée pour commander l'ouverture de ladite valve commandée (21) et à permettre l'accélération dudit moteur (2) lorsque ladite vitesse prédéterminée de rotation est atteinte par ledit turbocompresseur (9).

12. Dispositif selon la revendication 10, caractérisé en ce que ladite unité centrale (25) comprend des moyens (4) aptes à vérifier que la vitesse (V) du moteur (2), déterminée par ledit capteur (28), est égale à une première valeur de seuil prédéterminée ($V_1$), des moyens (42) aptes à vérifier que la pression délivrée par ladite source d'air comprimé (16) est égale à une valeur de pression prédéterminée ($P_o$), des moyens (44) aptes à commander l'ouverture de ladite valve commandée (21), des moyens de retardement (45), des moyens (46) aptes à permettre l'accélération, des moyens (48) aptes à commander ladite vitesse (V) dudit moteur (2) et à faire fonctionner lesdits moyens de calcul (47) tant que ladite vitesse est inférieure à une seconde valeur de seuil prédéterminée ($V_2$), et des moyens (49) aptes à commander la fermeture de ladite valve commandée (21).

13. Dispositif selon la revendication 12, caractérisé en ce qu'il comprend des moyens de mémoire (32, 33), des moyens (31) pour l'introduction de données par un opérateur, des moyens d'affichage (34) et des moyens (30) pour déterminer la pression produite par ladite source d'air comprimé (16), tous ces moyens étant raccordés à ladite unité de commande centrale (25).

Fig.1

Fig.2

Fig.3